# EUROPÄISCHE PATENTANMELDUNG

(11) **EP 2 404 771 A1**
(43) Veröffentlichungstag der Anmeldung: **11.01.2012**
(21) Anmeldenummer: 10168521.2
(22) Anmeldetag: 06.07.2010
(51) Int. Cl.: B60G 17/08, F16F 9/06, F16F 9/32

(54) **Hydropneumatischer Kolbenspeicher**

(71) Anmelder: HEMSCHEIDT FAHRWERKTECHNIK GmbH & Co. KG, 42781 Haan-Gruiten (DE)
(72) Erfinder: Runkel, Walter, 53547 Leubsdorf (DE)
(74) Vertreter: Patentanwälte Dr. Solf & Zapf

(57) **Zusammenfassung**

Die vorliegende Erfindung betrifft einen hydropneumatischen Kolbenspeicher (1) mit einem Primärzylinder (2), in dem ein Trennkolben (12) frei verschiebbar und umfangsgemäß abgedichtet geführt ist, wobei der Trennkolben (12) innerhalb des Primärzylinders (2) zwei Druckräume (16, 18) voneinander trennt.Der Trennkolben (12) weist einseitig eine axiale Trennkolbenstange (20) auf, die umfangsgemäß abgedichtet aus dem Primärzylinder (2) heraus und als Tauchkolben (22) in einen sich anschließenden und mit einem Druckmittel beaufschlagten oder beaufschlagbaren Sekundärzylinder (4) geführt ist. Der Tauchkolben (22) weist an seinem freien, vom Primärzylinder (2) wegweisenden Ende ein Anschlagelement (24) mit einem über den Außenumfang (26) des Tauchkolbens (22) radial vorspringenden Anschlagbereich (28) auf.

## Beschreibung

Die vorliegende Erfindung betrifft gemäß dem Oberbegriff des Anspruchs 1 einen hydropneumatischen Kolbenspeicher mit einem Primärzylinder, in dem ein Trennkolben frei verschiebbar und umfangsgemäß gegen eine Zylinder-Innenfläche abgedichtet geführt ist, wobei der Trennkolben innerhalb des Primärzylinders zwei - einerseits mit einem pneumatischen Druckmittel und andererseits mit einem Hydraulikmedium beaufschlagte oder beaufschlagbare - Druckräume voneinander trennt, und wobei der Trennkolben einseitig eine axiale Trennkolbenstange aufweist, die umfangsgemäß abgedichtet aus dem Primärzylinder heraus und als Tauchkolben (Plunger) in einen sich anschließenden und mit einem Druckmittel beaufschlagten oder beaufschlagbaren Sekundärzylinder geführt ist.

Derartige Kolbenspeicher werden insbesondere in Federungssystemen zur Radabstützung in Kraftfahrzeugen eingesetzt. So beschreibt beispielsweise die DE 195 15 295 A1 ein hydropneumatisches Federungssystem, wobei jeweils ein hydraulisches Federbein (Teleskop-Federzylinder) zur Erzeugung einer die jeweilige Radlast abstützenden Federkraft über ein Hydraulikmedium gegen einen Federspeicher wirkt. Dabei ist der/jeder Federspeicher als Kolbenspeicher der oben definierten, gattungsgemäßen Art ausgebildet. Der Kolbenspeicher weist einen "schwimmend", frei verschiebbar geführten Trennkolben auf, der einen hydraulisch mit dem Federbein verbundenen Speicherraum (erster Druckraum) von einer ein kompressibles Medium, insbesondere Gas, enthaltenden Federkammer (zweiter Druckraum) trennt. Der Trennkolben ist dabei mit einer aus dem Kolbenspeicher nach außen geführten Trennkolbenstange verbunden. Aufgrund dieser Trennkolbenstange besitzt der Trennkolben zwei unterschiedlich große druckbeaufschlagte Flächen, so dass er als Druckwandler derart wirkt, dass der hydraulische Druck stets größer als der pneumatische Druck ist. Dabei ist zusätzlich zur Beeinflussung der Federungscharakteristik vorgesehen, den Trennkolben über seine Trennkolbenstange mit einer Zusatz-Federkraft zu beaufschlagen. Bei der bekannten Ausführung wird diese Zusatz-Federkraft von einem auf die Trennkolbenstange wirkenden Sekundärzylinder erzeugt. Die Trennkolbenstange ist nach Art eines Tauchkolbens (Plunger) in den Sekundärzylinder geführt, so dass sie durch Beaufschlagung mit einem in dem Sekundärzylinder befindlichen Druckmittel mit einer in Richtung des Trennkolbens wirkenden Kraft beaufschlagt wird, die somit in Richtung der vom hydraulischen Druck bewirkten Kraft wirkt. Somit hat diese Zusatz-Federkraft die Tendenz, das Volumen der Federkammer des Primärzylinders zusätzlich zu verkleinern bzw. zu komprimieren. Bei dem bekannten Federungssystem sind dazu die Sekundärspeicher von zwei Kolbenspeichern hydraulisch mit einem gemeinsamen Zusatzspeicher verbunden, so dass innerhalb der Sekundärspeicher ein unter Druck stehendes Hydraulikmedium angeordnet ist.

Der bekannte Kolbenspeicher hat sich in der Praxis bisher gut bewährt, allerdings kann es unter bestimmten Betriebsbedingungen zu einer Überschreitung des zulässigen Höchstdrucks im Primärzylinder kommen, was gegebenenfalls dazu führen könnte, dass ein Zylinderdeckel auf der vom Sekundärzylinder wegweisenden Seite herausgedrückt wird. In einem solchen Schadensfall würde durch den Druck im Sekundärzylinder der gesamte Trennkolben geschossartig aus dem Speicher katapultiert werden.

Der vorliegenden Erfindung liegt die Aufgabe zu Grunde, den bekannten Kolbenspeicher hinsichtlich seiner Sicherheit zu verbessern.

Erfindungsgemäß wird diese Aufgabe durch die Merkmale des Anspruchs 1 gelöst. Vorteilhafte Ausgestaltungen der Erfindung sind in den abhängigen Ansprüchen enthalten.

Demnach ist erfindungsgemäß vorgesehen, dass die Trennkolbenstange bzw. deren den Tauchkolben bildender Endbereich am freien, vom Primärzylinder wegweisenden Ende ein Anschlagelement mit einem über den Außenumfang des Tauchkolbens radial vorspringenden Anschlagbereich aufweist. Sollte in dem oben beschriebenen Schadensfall der Trennkolben mit dem Tauchkolben durch den Druck im Sekundärzylinder in Richtung zum Primärzylinder beschleunigt werden, so stößt das Anschlagelement mit seinem Anschlagbereich auf eine Anschlagfläche vor einer Tauchkolben-Durchführung zum Primärzylinder, so dass sicher vermieden wird, dass der Trennkolben zusammen mit der Trennkolbenstange und dem Tauchkolben den Speicher geschossartig verlassen kann. Zwar werden dabei Deformationsschäden im Anschlagbereich auftreten, die den Kolbenspeicher zur weiteren Verwendung unbrauchbar machen, so dass er durch einen neuen Kolbenspeicher ersetzt werden muss. Dies wird aber im Interesse der erhöhten Sicherheit in Kauf genommen.

Anhand eines in der Zeichnung veranschaulichten, bevorzugten Ausführungsbeispiels soll die Erfindung im Folgenden genauer erläutert werden. Dabei zeigen:
- Fig. 1: eine schematische Seitenansicht eines erfindungsgemäßen Kolbenspeichers mit teilweise aufgebrochen dargestellten Bereichen und
- Fig. 2: einen vergrößerten Axialschnitt des Sekundärzylinders im Übergang zu dem Primärzylinder.

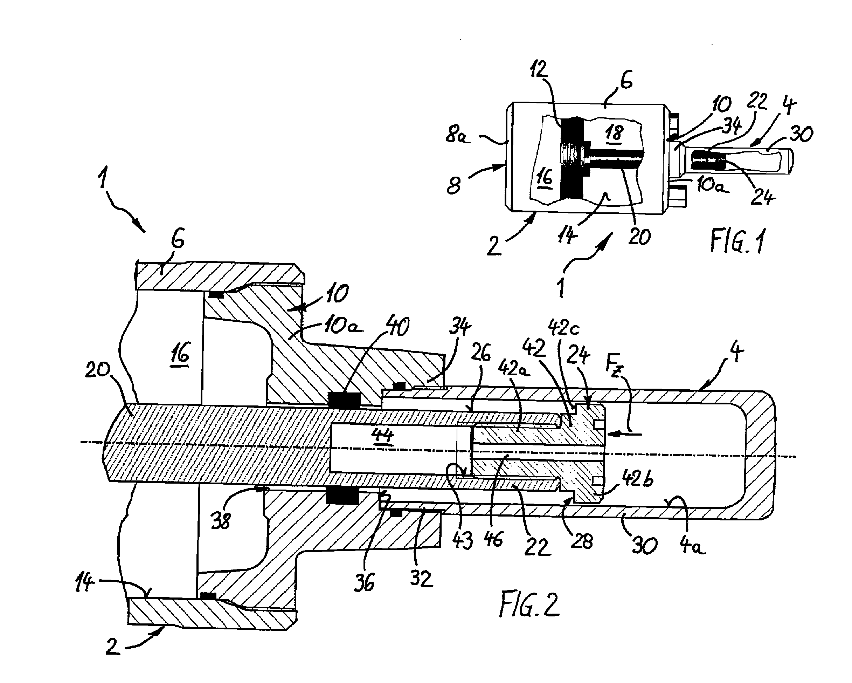

Ein erfindungsgemäßer hydropneumatischer Kolbenspeicher 1 besteht gemäß Fig. 1 aus einem Primärzylinder 2 und einem Sekundärzylinder 4. Der Primärzylinder 2 weist eine zylindrische Umfangswandung 6 und zwei Stirnwandungen 8, 10 auf, die bevorzugt als gesonderte Deckel 8a, 10a ausgebildet und insbesondere mit der Umfangswandung 6 druckdicht verschraubt sind. Innerhalb des Primärzylinders 2 ist ein Trennkolben 12 "schwimmend" frei verschiebbar und umfangsgemäß gegen eine Innenfläche 14 der Umfangswandung 6 abgedichtet geführt. Dadurch teilt der Trennkolben 12 innerhalb des Primärzylinders 2 zwei Druckräume 16, 18 voneinander ab, die einerseits mit einem pneumatischen Druckmittel und andererseits mit einem Hydraulikmedium beaufschlagt oder beaufschlagbar sind. Der Trennkolben 12 ist auf einer Seite mit einer sich axial, d. h. in Richtung einer Bewegungsachse des Trennkolbens 12 erstreckenden, zentrischen Trennkolbenstange 20 verbunden, die umfangsgemäß abgedichtet aus dem Primärzylinder 2 heraus und als Tauchkolben 22 (so genannter Plunger) in den sich axial anschließenden Sekundärzylinder 4 geführt ist. Durch Beaufschlagung des Sekundärzylinders 4 mit einem Druckmittel wird über den Tauchkolben 22 eine in Richtung des Trennkolbens 12 wirkende Zusatzkraft F_{Z} erzeugt.

Wie sich nun aus Fig. 2 ergibt, weist der Tauchkolben 22 erfindungsgemäß an seinem freien, vom Primärzylinder 2 wegweisenden Ende ein Anschlagelement 24 mit einem über den zylindrischen Außenumfang 26 des Tauchkolbens 22 radial vorspringenden Anschlagbereich 28 auf. Durch dieses Anschlagelement 24 wird vorteilhafterweise ausgeschlossen, dass nach erfolgter Montage des erfindungsgemäßen Kolbenspeichers 1 der Tauchkolben 22 den Sekundärzylinder 4 in Richtung des Primärzylinders 2 verlassen kann. Es handelt sich somit um eine "Fangvorrichtung", um sicher auszuschließen, dass im Falle eines Überdruck-bedingten Lösens der Deckel-Stirnwandung 8, 8a der gesamte Trennkolben 12 mit seiner Trennkolbenstange 20 nebst Tauchkolben 22 aus dem Kolbenspeicher 1 herausgeschossen werden kann.

In konstruktiver Hinsicht ist für die Montierbarkeit des Kolbenspeichers 1 vorgesehen, dass der Sekundärzylinder 4 von einem einendig geschlossenen Rohr 30 gebildet ist, wobei dieses Rohr 30 über ein an seinem offenen Ende angeordnetes Gewinde 32 mit einem Gewindestutzen 34 der Stirnwandung 10 bzw. des mit der Umfangswandung 6 verschraubten Deckels 10a des Primärzylinders 2 druckdicht verschraubt ist. Der Gewindestutzen 34 bildet mit einer radialen Ringfläche 36 einen Anschlag für das Anschlagelement 24 des Tauchkolbens 22. Der Gewindestutzen 34 bildet zudem eine Durchführung 38 für die Trennkolbenstange 20, wobei innerhalb der Durchführung 38 (mindestens) eine Umfangsdichtung 40 für die Trennkolbenstange 20 angeordnet ist. Diese Umfangsdichtung 40 dichtet den Ringspalt zwischen der Trennkolbenstange 20 und der Durchführung 38 druckdicht ab, so dass innerhalb des Sekundärzylinders 4 und innerhalb des benachbarten Druckraums 16 des Primärzylinders 2 unterschiedliche Drücke herrschen können.

Weiterhin ist zum Zwecke der Montierbarkeit vorgesehen, dass das Anschlagelement 24 von einer Schraube 42 gebildet ist, die mit einem Gewindeschaft 42a in ein axiales Innengewinde 43 des Tauchkolbens 22 eingreift, und die einen gegenüber dem Tauchkolben 22 im Durchmesser vergrößerten Kopf 42b aufweist, wobei der Kopf 42b auf seiner dem Gewindeschaft 42a zugewandten Seite eine den Anschlagbereich 28 bildende, radiale Ringfläche 42c aufweist.

Durch die beschriebene Ausgestaltung kann der erfindungsgemäße Kolbenspeicher 1 wie folgt montiert werden:
Zunächst wird bei noch geöffneter vorderer Stirnwandung 8 (Deckel 8a) der Trennkolben 12 mit der Trennkolbenstange 20 voraus in den Primärzylinder 2 eingesetzt. Dabei wird die Trennkolbenstange 20 - noch ohne das erfindungsgemäße Anschlagelement 24 - durch die Durchführung 38 und die Dichtung 40 hindurch nach außen geführt. Es kann dann der Primärzylinder 2 mit der Stirnwandung 8 (dem Deckel 8a) verschlossen werden, wozu bevorzugt eine Gewindeverbindung z.B. nach Art eines Schraubdeckels vorgesehen ist. An dem noch frei nach außen ragenden, den Tauchkolben 22 bildenden Ende der Trennkolbenstange 20 kann dann die das Anschlagelement 24 bildende Schraube 42 montiert werden. Schließlich wird das den Sekundärzylinder 4 bildende Rohr 30 mit seinem offenen Ende über den Tauchkolben 22 geführt und mit seinem Gewinde 32 mit dem Gewindestutzen 34 fest verschraubt. Schließlich kann die Druckbeaufschlagung erfolgen.

Dazu ist der Sekundärzylinder 4 über einen Füllanschluss mit einem insbesondere pneumatischen Druckmittel beaufschlagbar. Vorzugsweise wird Stickstoff eingesetzt. Eine Beaufschlagung mit einem hydraulischen Medium liegt allerdings im Bereich der Erfindung.

Der erste, als Ringraum die Trennkolbenstange 20 umschließende Druckraum 16 des Primärzylinders 2 ist über einen Leitungsanschluss mit einem Hydraulikmedium zu beaufschlagen. In aller Regel wird der erste Druckraum 16 hydraulisch mit einem Federzylinder (Teleskop-Federbein) eines Fahrzeug-Federungssystems verbunden.

Der zweite, als Zylinderraum der Trennkolbenstange 20 gegenüberliegende Druckraum 18 wird über einen Füllanschluss mit einem pneumatischen Druckmittel, insbesondere ebenfalls Stickstoff, beaufschlagt.

Der Vollständigkeit halber sei noch erwähnt, dass der Tauchkolben 22 einschließlich des Anschlagelementes 24 als "Plunger" innerhalb des Sekundärzylinders 4 reibungsfrei mit radialem Umfangsabstand zur Zylinder-Innenwandung 4a angeordnet ist.

In einer in Fig. 2 veranschaulichten, besonders vorteilhaften Ausgestaltung der Erfindung weist der Tauchkolben 22 einen Hohlraum auf, der eine Ausgleichskammer 44 bildet, die über einen axialen Durchgangskanal 46 des Anschlagelementes 24 mit dem Innenraum des Sekundärzylinders 4 in Verbindung steht. Hierbei ist die Ausgleichskammer 44 in Anpassung an das Anschlagelement 24 derart ausgelegt, dass ihr Volumen zumindest annähernd dem für die Verdrängung des Druckmittels maßgeblichen Volumen des Anschlagelementes 24 entspricht. Vorteilhafterweise kann hierdurch das Innenvolumen des Sekundärzylinders 4 trotz des zusätzlich im Innenraum angeordneten Anschlagelementes 24 weitgehend konstant gehalten werden, was entsprechend auch für die Druck- und Kompressionseigenschaften (Federkennlinie) des Druckmittels gilt.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Hydropneumatischer Kolbenspeicher (1) mit einem Primärzylinder (2), in dem ein Trennkolben (12) frei verschiebbar und umfangsgemäß abgedichtet geführt ist, wobei der Trennkolben (12) innerhalb des Primärzylinders (2) zwei Druckräume (16, 18) voneinander trennt, und wobei der Trennkolben (12) einseitig eine axiale Trennkolbenstange (20) aufweist, die umfangsgemäß abgedichtet aus dem Primärzylinder (2) heraus und als Tauchkolben (22) in einen sich anschließenden und mit einem Druckmittel beaufschlagten oder beaufschlagbaren Sekundärzylinder (4) geführt ist,
**dadurch gekennzeichnet, dass** der Tauchkolben (22) an seinem freien, vom Primärzylinder (2) wegweisenden Ende ein Anschlagelement (24) mit einem über den Außenumfang (26) des Tauchkolbens (22) radial vorspringenden Anschlagbereich (28) aufweist.

2. Kolbenspeicher nach Anspruch 1,
**dadurch gekennzeichnet, dass** der Tauchkolben (22) einschließlich des Anschlagelementes (24) innerhalb des Sekundärzylinders (4) mit radialem Umfangsabstand zur Zylinder-Innenwandung angeordnet ist.

3. Kolbenspeicher nach Anspruch 1 oder 2,
**dadurch gekennzeichnet, dass** das Anschlagelement (24) von einer Schraube (42) gebildet ist, die mit einem Gewindeschaft (42a) in ein axiales Innengewinde (43) des Tauchkolbens (22) eingreift, und die einen gegenüber dem Tauchkolben (22) im Durchmesser vergrößerten Kopf (42b) aufweist, wobei der Kopf (42b) auf seiner dem Gewindeschaft (42a) zugewandten Seite eine den Anschlagbereich (28) bildende Ringfläche (42c) aufweist.

4. Kolbenspeicher nach einem der Ansprüche 1 bis 3,
**dadurch gekennzeichnet, dass** der Tauchkolben (22) einen Hohlraum aufweist, der eine über einen axialen Durchgangskanal (46) des Anschlagelementes (24) mit dem Innenraum des Sekundärzylinders (4) verbundene Ausgleichskammer (44) bildet, deren Volumen zumindest annähernd dem Volumen des Anschlagelementes (24) entspricht.

5. Kolbenspeicher nach einem der Ansprüche 1 bis 4,
**dadurch gekennzeichnet, dass** der Sekundärzylinder (4) von einem einseitig geschlossenen Rohr (30) gebildet und über ein an einem offenen Ende angeordnetes Gewinde (32) mit einem Gewindestutzen (34) des Primärzylinders (2) druckdicht verschraubt ist.

6. Kolbenspeicher nach Anspruch 5,
**dadurch gekennzeichnet, dass** der Gewindestutzen (34) mit einer radialen Ringfläche (36) einen Anschlag für das Anschlagelement (24) des Tauchkolbens (22) bildet.

7. Kolbenspeicher nach einem der Ansprüche 1 bis 6,
**dadurch gekennzeichnet, dass** die Trennkolbenstange (20) durch eine Zylinder-Durchführung (38) und mindestens eine im Bereich der Durchführung (38) angeordnete Umfangsdichtung (40) geführt ist.

8. Kolbenspeicher nach einem der Ansprüche 1 bis 7,
**dadurch gekennzeichnet, dass** der Sekundärzylinder (4) mit einem pneumatischen Druckmittel, insbesondere Stickstoff, beaufschlagt oder beaufschlagbar ist.

9. Kolbenspeicher nach einem der Ansprüche 1 bis 8,
**dadurch gekennzeichnet, dass** der erste, als Ringraum die Trennkolbenstange (20) umschließende Druckraum (16) des Primärzylinders (2) mit einem Hydraulikmedium beaufschlagt oder beaufschlagbar ist.

10. Kolbenspeicher nach einem der Ansprüche 1 bis 9,
**dadurch gekennzeichnet, dass** der zweite, als Zylinderraum der Trennkolbenstange (20) gegenüberliegende Druckraum (18) des Primärzylinders (2) mit einem pneumatischen Druckmittel, insbesondere Stickstoff, beaufschlagt oder beaufschlagbar ist.
